# EUROPÄISCHE PATENTSCHRIFT

(11) **EP 1 384 064 B1**
(45) Veröffentlichungstag und Bekanntmachung des Hinweises auf die Patenterteilung: **09.12.2009**
(21) Anmeldenummer: 02722046.6
(22) Anmeldetag: 05.02.2002
(51) Int. Cl.: G01N 31/22, C07D 301/12, B01J 19/00

(54) **Verfahren zur Steuerung der Oxidation von Propen mit H2O2**
Method for controlling the oxidation of propene with H2O2
Procédé pour controller l'oxydation de propène avec H2O2.

(30) Priorität: 07.02.2001 DE 10105528
(43) Veröffentlichungstag der Anmeldung: 28.01.2004
(73) Patentinhaber: BASF SE, 67056 Ludwigshafen (DE)
(72) Erfinder: BEUERMANN, Thomas, 68161 Mannheim (DE); TELES, Joaquim, Henrique, 67166 Otterstadt (DE)
(86) Internationale Anmeldenummer: PCT/EP2002/001178
(87) Internationale Veröffentlichungsnummer: WO 2002/063285

(56) Entgegenhaltungen:
- EP-A- 0 314 046
- EP-A- 0 712 852
- EP-A1- 0 068 289
- EP-A1- 1 006 100
- US-A- 4 670 385
- US-A- 5 066 462
- US-A- 6 037 484
- PATENT ABSTRACTS OF JAPAN vol. 013, no. 119 (C-579), 23. März 1989 (1989-03-23) & JP 63 291594 A (WAKO PURE CHEM IND LTD), 29. November 1988 (1988-11-29)
- PATENT ABSTRACTS OF JAPAN vol. 016, no. 207 (C-0941), 18. Mai 1992 (1992-05-18) & JP 04 036196 A (KIYOUWA MEDETSUKUSU KK), 6. Februar 1992 (1992-02-06)
- DATABASE WPI Section Ch, Week 198738 Derwent Publications Ltd., London, GB; Class E24,Page 2, AN 1987-269288 XP002218810 & SU 1 286 995 A (EXP METEDROLOGY INS), 30. Januar 1987 (1987-01-30)
- GAUGLITZ ET AL: "Automatische digitale Erfassung zeitabhäingiger Absorptions- und Fluorescenzspektren für kinetische Messungen" ZEITSCHRIFT FÜR ANALYTISCHE CHEMIE, no. 276, 1975, pages 97-102,

## Beschreibung

Die vorliegende Erfindung betrifft ein Verfahren zur Steuerung eines Verfahrens zur Oxidation von Propen zu Propylenoxid mit Wasserstoffperoxid in methanolischer Lösung in Gegenwart eines Zeolith-Katalysators, der ein Titansilikalit mit MFI-Struktur ist, wobei während der Umsetzung der Gehalt an Wasserstoffperoxid im Umsetzungsgemisch online bestimmt wird.

Der Umsatz von Edukten chemischer Synthesen wird in der Regel über ihren Gehalt in der Syntheselösung, bzw. den Syntheseaustrag bestimmt. Insbesondere bei kontinuierlich durchgeführten Reaktionen ist es oft wünschenswert den Umsatz eines oder mehrerer Edukte innerhalb enger Grenzen zu halten. Dazu ist es notwendig, während des Syntheseverfahrens in bestimmten zeitlichen Abständen Proben aus diesem zu entnehmen und den Gehalt des jeweiligen Edukts zu ermitteln. Wird im Austrag ein vom optimalen Sollwert abweichender Restgehalt an Edukt bestimmt, so können beispielsweise die Zugabe der Edukte neu geregelt, oder die Reaktionsbedingungen (z.B. Temperatur oder pH-Wert) angepaßt werden, um den Umsatz wieder auf den gewünschten Sollwert einzustellen.

Einen besonders wichtigen Fall bilden Oxidationsreaktionen mit Wasserstoffperoxid.

Um den Gehalt von Wasserstoffperoxid in einem bei einer chemischen Umsetzung anfallenden Gemisch zu bestimmen, stehen dem Fachmann in der Regel eine Vielzahl von analytischen Methoden zur Verfügung. Grundsätzlich läßt sich Wasserstoffperoxid unter Ausnutzung seiner oxidierenden als auch reduzierenden Eigenschaften sowohl quantitativ als auch qualitativ bestimmen.

Qualitativ läßt sich Wasserstoffperoxid beispielsweise durch die Reaktion mit einer Titan (IV)-oxidsulfat-Lösung nachweisen. Infolge der Bildung eines Titan(IV)-Peroxykomplexes tritt dabei eine intensive Gelbfärbung auf. Als qualitativer Nachweis dient auch die Reaktion mit Kaliumdichromatlösung und verdünnter Schwefelsäure, infolge derer eine Blaufärbung der Reaktionslösung auftritt.

Die quantitative Bestimmung hingegen erfolgt beispielsweise durch die dem Fachmann hinreichend bekannte oximetrische Titration mit folgenden Reagenzien: Kaliumpermanganat, Natriumjodid oder Cer(IV)-sulfat.

Nachteilig bei der Analyse von Wasserstoffperoxid wirken sich in der Analyselösung möglicherweise vorhandene organische Hydroperoxide beispielsweise Hydroperoxypropanole aus, denn auch sie reagieren mit KMnO₄ , NaI und Cer(IV)-sulfat.

Ebenfalls problematisch ist die Bestimmung von Wasserstoffperoxid, wenn die zu bestimmende Menge sehr gering, d.h. in der Regel unter 1 Gew.-%, ist.

Ein weiteres Problem tritt auf, wenn das Gemisch, in welchem der Gehalt von Wasserstoffperoxid bestimmt werden soll, sehr komplexer Natur ist, d.h., wenn in der Analyselösung neben der zu bestimmenden Substanz noch weitere Substanzen vorhanden sind. Hier sind z.B. weitere nicht umgesetzte Edukte sowie neben dem Hauptprodukt anfallende Nebenprodukte zu nennen.

So kann eine Wasserstoffperoxid-Bestimmung in Syntheselösungen mit niedriger Konzentration von Wasserstoffperoxid oder/und komplexer Natur in der Regel nicht direkt durch Messungen wie optische Absorption, Reflexion oder Emission, beispielsweise Fluoreszenz oder Phosphoreszenz, durchgeführt werden.

Weiterhin scheitert die Messung der Absorption von Wasserstoffperoxid im Nah-InfrarotBereich, z.B. die FT-NIR-Spektroskopie im Bereich von 4631 bis 5140 cm⁻¹, neben den oben genannten Gründen, auch an der Interferenz von Wasser und organischen Hydroperoxiden.

Auch die Messung der Absorption von Wasserstoffperoxid im Ultravioletten-Bereich, z.B. die Messung der UV-Absorption bei 254 oder 280 nm ist nur geeignet, um die Konzentration von Wasserstoffperoxid in Wasser/Methanol-Lösungen zuverlässig zu bestimmen. Sind jedoch in der Syntheselösung organische Hydroperoxide vorhanden, so ist eine zuverlässige Analyse von Wasserstoffperoxid nach dieser Methode nicht mehr möglich.

Kolorimetrische Methoden eignen sich hingegen gut zur selektiven Bestimmung von Wasserstoffperoxid in Syntheselösungen mit komplexer Natur und/oder geringem Gehalt von Wasserstoffperoxid. Bei ihrer Durchführung wird durch Umsetzung der zu untersuchenden Probe mit einem geeigneten Reagenz eine Substanz hergestellt, welche im UV/VIS-Bereich des Spektrums absorbiert oder fluoresziert und somit bestimmbar ist.

Beispielsweise beruht die Bestimmung von Wasserstoffperoxid über die sogenannte "Enzymatische Methode mit Peroxidase" auf der Oxidation eines Leucofarbstoffs (beispielsweise Leuco-Kristallviolett) durch das zu bestimmende Wasserstoffperoxid. Katalysiert wird diese Reaktion durch eine Peroxidase (z.B. Rettich-Peroxidase Typ II, EC-Nr. 1.11.1.7, (AS-Reg.-Nr. 9003-99-0). Im Anschluß wird der gebildete Farbstoff photometrisch, z.B. bei 596 nm im Falle von Leuco-Kristallviolett, bestimmt. Diese Methode ist spezifisch für Wasserstoffperoxid. Lediglich Hydroperoxide, welche in Lösung ausgesprochen leicht Wasserstoffperoxid abspalten, führen zu Interferenzen. Ausführlich ist diese Methode in H.U. Bergmeyer, "*Methoden der enzymatische Analyse*", 3. Aufl., Bd. II, S. 2297ff., Verlag Chemie, Weinheim (1974) beschrieben.

Auch die sogenannte "Titansulfat-Methode" eignet sich zur quantitativen kolorimetrischen Bestimmung von Wasserstoffperoxid in Anwesenheit von organischen Hydroperoxiden. Negativ beeinflußt wird dieser Nachweis nur durch Hydroperoxide, welche in saurem Medium dazu neigen Wasserstoffperoxid abzuspalten (z.B. Hemiperacetale). Diese Methode basiert auf dem durch die Umsetzung von vorhandenem Wasserstoffperoxid mit einem Titan(IV)-Reagenz (beispielsweise Titanylsulfat, Titan(IV)chlorid oder auch Kaliumtitanyloxalat) entstehenden, gelb gefärbten Titanylperoxo-Komplex. Dieser weist bei etwa 408 nm eine starke Absorption auf. Details zur Durchführung dieser Methode können der Literatur beispielsweise bei Kaká 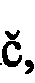 , Z. Vejdelek, "Handbuch der photometrischen Analyse organischer Verbindungen", Band 1, S. 92ff., Verlag Chemie, Weinheim (1974) bzw. in G. M. Eisenberg. Ind. Eng. Chem., Anal. Ed. (1943) 15, 327 und den darin zitierten Literaturstellen entnommen werden.

Diese Methode eignet sich, wie auch im Artikel von C. B. Allsopp in "Analyst" (1941) 66, 371 beschrieben, zur Bestimmung von Wasserstoffperoxid in einem sehr niedrigen Konzentrationsbereich von bis zu 10⁻⁵ N.

Eine dritte kolorimetrische und ebenfalls für die selektive Bestimmung von Wasserstoffperoxid geeignete Methode stellt die sogenannte "Cobalt-Hydrogencarbonat-Methode" dar. Diese beruht auf der Reaktion von Wasserstoffperoxid mit Co(II)-Ionen unter Bildung eines gefärbten Cobalt-Peroxo-Komplexes. Dieser absorbiert bei etwa 260 nm sehr stark. Eine genaue Beschreibung dieser Methode findet man in der dem Fachmann bekannten Literatur, beispielsweise in Masschelen, W. "Spectrophotometric Determination of Residual Hydrogen Peroxide", Water and Sewerage Works, p. 69, August 1977.

Einerseits ist die Empfindlichkeit dieser Methode zwar sehr hoch, so daß damit beispielsweise Wasserstoffperoxidkonzentrationen von etwa 0.02 ppm nachgewiesen werden können. Andererseits absorbieren bestimmte Verbindungen, welche beispielsweise als Nebenprodukte der Oxidation von Propylen mit Wasserstoffperoxid entstehen (z.B. Aceton, mit cut-off bei einer Wellenlänge von λ_{c}< 330 nm), auch in diesem Bereich und interferieren somit mit der Wasserstoffperoxidbestimmung. Dies ist vor allem bei besonders geringen Konzentrationen von Wasserstoffperoxid von etwa <100 ppm H₂O₂ problematisch.

Bei der Durchführung solcher Reaktionen, wie beispielsweise der Oxidation eines Alkens mit Wasserstoffperoxid in Gegenwart eines Zeolith-Katalysators, soll eine optimale Ausbeute erzielt werden, aber gleichzeitig muß eine sichere Beherrschung der Reaktion gewährleistet sein. Dazu ist es notwendig, die Wasserstoffperoxid-Konzentration online zu verfolgen.

In der Regel kann ein Analyseverfahren, dessen Endpunkt sich photometrisch indizieren läßt, auch mittels automatisierter Analyseeinrichtungen durchgeführt werden. Ihr Einsatz im Rahmen eines Syntheseverfahrens erfolgte bisher häufig getrennt von der zur Auswertung oder Prozeßsteuerung verwendeten Datenverarbeitungsanlage und ist, wenn überhaupt, nur indirekt mit dieser gekoppelt, sozusagen "offline".

Die bisher eingesetzten "offline" anzuwendenden Analysemethoden zur Bestimmung von Wasserstoffperoxid im Rahmen von laufenden Syntheseverfahren sind dahingehend nachteilig, daß es zu einer zeitlichen Verzögerung zwischen der Bestimmung des Gehalts von Wasserstoffperoxid sowie der daraus als notwendig resultierenden Anpassung der Synthesebedingungen kommt.

Aufgrund dieser zeitlichen Verzögerung können die Synthesebedingungen nicht schnell genug an den veränderten Gehalt an Wasserstoffperoxid angepaßt werden. Die Synthese verläuft also für diesen Zeitraum bis zur Anpassung nicht optimal. Während dieser Zeit können beispielsweise vermehrt unerwünschte Nebenprodukte entstehen. Diese verringern wiederum die Ausbeute an dem eigentlichen Produkt und erschweren dessen Aufarbeitung.

Aus den genannten Gründen ist es bisher weitgehend unmöglich, die Wirtschaftlichkeit von Syntheseverfahren, wie beispielsweise die Oxidation von Alkenen mit Wasserstoffperoxid in Anwesenheit eines Katalysators, durch ein Monitoring der Wasserstoffperoxidkonzentration, hinsichtlich der Ausbeute und Reinheit des Produkts zu verbessern.

Zum anderen erscheint es vor allem bei zu exothermen Zersetzungsreaktionen neigenden Edukten, wie Wasserstoffperoxid, aus sicherheitstechnischen Überlegungen heraus bedenklich zu sein, ihren Gehalt im Syntheseaustrag über eine gewisse Zeitspanne unkontrolliert zu lassen. Durch nicht umgesetztes und somit im Syntheseaustrag vorliegendes Wasserstoffperoxid kann es beispielsweise bei der sich anschließenden Aufarbeitung des Produkts zu sicherheitstechnisch unerwünschten Situationen, wie explosiven Zersetzungsreaktionen kommen.

Somit wäre es vorteilhaft, insbesondere im Fall von Batch- oder Semibatch-Reaktionen eine Online-Überwachung der Wasserstoffperoxid-Konzentration in der Hand zu haben, um zu vermeiden, daß sich unzulässig hohe Konzentrationen an Wasserstoffperoxid, die ein sicherheitstechnisches Risiko darstellen, aufpegeln können.

Im Falle einer Oxidation in einem kontinuierlichen Reaktor ist es wichtig, den Restgehalt (und somit auch den Umsatz) an Wasserstoffperoxid möglichst zeitnah zu verfolgen und durch Änderung der Reaktionsbedingungen (z.B. Temperatur, pH-Wert oder Eduktmengen) diesen innerhalb vordefinierter Grenzen zu halten. Auch dies könnte durch eine geeignete Online-Bestimmung erreicht werden.

Ganz besonders wichtig wäre eine Online-Bestimmung des Wasserstoffperoxid-Gehalts, wenn die Oxidationsreaktion kontinuierlich in Anwesenheit eines Katalysators durchgeführt wird, dessen katalytische Aktivität nicht konstant ist (z.B. wegen einer Deaktivierung des Katalysators). Um in diesem Fall einen vorgegebenen Sollwert für den Restgehalt an Wasserstoffperoxid einzuhalten, ist es unerläßlich, die Reaktionsbedingungen laufend anzupassen, um die sich ändernde katalytische Aktivität zu kompensieren.

Somit bestand eine Aufgabe der Erfindung darin, ein Verfahren zur Online-Bestimmung des Gehalts von Wasserstoffperoxid, sowie ein dieses Verfahren integrierendes Verfahren zur Oxidation von Alkenen mit Wasserstoffperoxid bereitzustellen, durch welche die oben aufgeführten Nachteile vermieden werden.

Daher betrifft die vorliegende Erfindung ein Verfahren zur Steuerung eines Verfahrens zur Oxidation von Propen zu Propylenoxid mit Wasserstoffperoxid in methanolischer Lösung in Gegenwart eines Zeolith-Katalysators, der ein Titansilikalit mit MFI-Struktur ist, wobei während der Umsetzung der Gehalt an Wasserstoffperoxid im Umsetzungsgemisch online bestimmt wird mittels eines Verfahrens, welches wenigstens die folgenden Stufen umfasst:
(1) Versetzen des Wasserstoffperoxid enthaltenden Gemischs mit wenigstens einem Reagenz, welches mit Wasserstoffperoxid zur Bildung einer mit optischen Methoden detektierbaren Substanz geeignet ist, unter Bildung der Substanz,
(2) Bestimmung des Gehalts der Substanz durch Messung ihrer spezifischen Absorption in einem dafür geeigneten Wellenlängenbereich,
und wobei diese online Bestimmung mittels einer Geräteanordnung, umfassend mindestens eine Probenentnahmevorrichtung zur Entnahme einer Probe aus dem im Laufe der Synthese anfallenden Reaktionsgemisches, wenigstens eine Geräteanordnung zur Aufbereitung der Probe, wenigstens eine Vorrichtung, welche geeignet ist, die spezifische Absorption der Probe in einem dafür geeigneten Wellenlängenbereich zu bestimmen, und wenigstens ein, mit diesen Vorrichtungen in Verbindung stehendes Gerät, welches geeignet ist die Steuerfunktion der einzelnen Geräte zu übernehmen, um deren Betriebsablauf zu koordinieren, durchgeführt wird, und wobei zur Prozesssteuerung der Syntheseanlage die von der Geräteanordnung zur online Bestimmung von Wasserstoffperoxid ermittelten Daten über mindestens eine mit dieser Geräteanordnung in Verbindung stehenden Datenverarbeitungsanlage ausgewertet und in Steuerbefehle für die Prozesssteuerung der Syntheseanlage umgewandelt werden, und wobei die Steuerbefehle an die mit der wenigstens einen Datenverarbeitungsanlage in Verbindung stehenden Prozesssteuerung der Syntheseanlage weitergeleitet werden.

Unter dem Begriff "Online-Bestimmung des Gehalts von Wasserstoffperoxid", wie er im Rahmen der vorliegenden Erfindung verwendet wird, werden die unter beschriebenen Verfahrens-, bzw. Geräteanordnungen von zur Bestimmung von Wasserstoffperoxid geeigneten Geräten verstanden, welche in direkter Weise mit wenigstens einer Datenverarbeitungsanlage in Verbindung stehen und über welche es möglich ist, regulierend in einen Syntheseprozeß einzugreifen. Eine im Rahmen dieser Erfindung bevorzugte Vorrichtung zur "Online-Bestimmung des Gehalts von Wasserstoffperoxid wird in der DE 101 211 94.5 der Anmelderin beschrieben.

Der Ausdruck "in direkter Weise" umfaßt dabei alle dem Fachmann bekannten Arten, in welchen ein Gerät mit wenigstens einer Datenverarbeitungsanlage in Verbindung stehen kann. Diese Verbindung kann beispielsweise über weitere dem Fachmann bekannte Geräte erfolgen. Diese sind in der Lage, die von der Geräteanordnung zur Bestimmung ausgehenden Signale beispielsweise zu empfangen, zu verstärken, zu wandeln oder anderweitig zu modulieren. Weiterhin können sie sowohl untereinander, als auch mit der Geräteanordnung zur Bestimmung sowie mit der wenigstens einen Datenverarbeitungsanlage über handelsübliche Kabelverbindungen, Infrarotschnittstellen oder ähnlichen, zur Weiterleitung von Signalen geeigneten Mitteln, verbunden sein.

Im Rahmen der vorliegenden Erfindung umfaßt die Geräteanordnung zur Online-Bestimmung von Wasserstoffperoxid mindestens eine Probenentnahmevorrichtung zur Entnahme einer Probe aus dem im Laufe der Synthese anfallenden Reaktionsgemisch, wenigstens eine Geräteanordnung zur Aufbereitung der Probe sowie wenigstens eine Vorrichtung, welche geeignet ist, die spezifische Absorption der Probe in einem dafür geeigneten Wellenlängenbereich zu bestimmen. Die in Rede stehende Geräteanordnung umfaßt wenigstens ein, mit den eben aufgeführten Vorrichtungen in Verbindung stehendes Gerät, welches geeignet ist, die Steuerfunktion der einzelnen Geräte zu übernehmen, um so deren Betriebsablauf zu koordinieren.

Zur Prozeßsteuerung der Syntheseanlage werden die von der Geräteanordnung zur Online-Bestimmung von Wasserstoffperoxid ermittelten Daten über wenigstens eine mit dieser Geräteanordnung in Verbindung stehenden Datenverarbeitungsanlage ausgewertet und in Steuerbefehle für die Prozeßsteuerung der Syntheseanlage umgewandelt. Diese Steuerbefehle werden sodann an die mit der wenigstens einen Datenverarbeitungsanlage in Verbindung stehende Prozesssteuerung der Syntheseanlage (Prozeßleitsystem) weitergeleitet werden.

Ein typischerweise in vorliegendem Verfahren eingesetztes Gemisch umfaßt wenigstens die bei der hier in Rede stehenden Umsetzung entstehenden Produkte, Zwischenprodukte, Nebenprodukte und Edukte, wie Wasserstoffperoxid.

Chemische Umsetzungen, welche das zur Bestimmung von Wasserstoffperoxid mit Hilfe des erfindungsgemäßen Verfahrens anfallende Gemisch hervorbringen, können alle dem Fachmann bekannten chemischen Reaktionen sein, bei welchen Wasserstoffperoxid beispielsweise als Edukt eingesetzt wird oder auch als Neben- oder Zwischenprodukt entstehen kann.

Um den Gehalt von Wasserstoffperoxid im Rahmen der vorliegenden Erfindung bestimmen zu können, wird das anfallende Gemisch zunächst mit wenigstens einem Reagenz versetzt, welches mit Wasserstoffperoxid eine mit optischen Methoden detektierbare Substanz bildet.

Reagenzien mit der oben genannten Eigenschaft sind grundsätzlich alle dem Fachmann für diesen Zweck bekannten Verbindungen. Sie können sowohl einzeln, als auch in einem Gemisch miteinander oder zusammen mit weiteren Verbindungen eingesetzt werden.

Weitere Verbindungen können beispielsweise stabilisierende oder lösende Zusätze aufweisen.

Allgemein beruht die Bildung der Substanz darauf, daß das Reagenz mit Wasserstoffperoxid einen Komplex oder eine Verbindung bildet, welche mit Hilfe optischer Methoden detektiert werden kann. Dabei kann der Gehalt der Substanz und damit der Gehalt von Wasserstoffperoxid im Vergleich mit einem jeweils geeigneten Standard ermittelt werden.

Bevorzugt wird das wenigstens eine Reagenz ausgewählt aus der Gruppe bestehend aus Metallen der IV. bis IX. Nebengruppe des Periodensystems der Elemente.

Weiterhin bevorzugt wird das wenigstens eine Reagenz ausgewählt aus der Gruppe bestehend aus Titan, Cobalt, Chrom, Zirkonium, Hafnium, Vanadium, Niob oder Tantal enthaltende Verbindungen.

Beispielhaft können in diesem Zusammenhang folgende Reagenzien eingesetzt werden: Titan(IV)-Verbindungen wie Titanylsulfat, Cobalt(II)salze, beispielsweise Cobalt(II)sulfat oder Cobaltbicarbonat, Molybdän(VI)-Salze, beispielsweise Ammoniummolybdat, Vanadiumsalze, wie Vanadylsulfat, etc.

Besonders bevorzugt wird als Reagenz Titanylsulfat oder Cobalt(II)sulfat eingesetzt.

In einer weiterhin bevorzugten Ausführungsform der vorliegenden Erfindung umfaßt das wenigstens eine Reagenz einen Leuco-Farbstoff und eine Peroxidase.

Unter dem Begriff "Leuco-Farbstoff" wird im Rahmen der Erfindung jeder Farbstoff verstanden, dessen oxidierte Form eine schwächere oder stärkere oder andere, z.B. bezüglich der Absorptionswellenlänge verschobene spezifische Absorption im optischen Spektrum aufweist, als dessen reduzierte Form.

Bevorzugt wird hierbei Leucokristallviolett (Tris-(-4-dimethylaminophenyl)-methan), Leucomalachitgrün (Bis-(-4-dimethylaminophenyl)-phenylmethan), o-Dianisidin sowie Acridiniumsalze, wie z.B. 10-Methyl-α-(p-formylphenyl)-acridiniumcarboxylat und Purpurogallin eingesetzt.

Besonders bevorzugt wird Leucokristallviolett (Tris-(-4-dimethylaminophenyl)-methan) oder Purpurogallin eingesetzt.

Die Bildung einer, durch optische Methoden detektierbaren Substanz verläuft bei der Reaktion von Wasserstoffperoxid mit dem jeweiligen Leuco-Farbstoff über eine Elektronenübertragungsreaktion, welche durch eine Peroxidase katalysiert wird. Der Leuco-Farbstoff wird dabei oxidiert. Die oxidierte Form des Leuco-Farbstoffes absorbiert sodann bei einer für sie spezifischen Wellenlänge und kann somit mit Hilfe optischer Methoden detektiert werden. Auch hier kann durch Vergleich mit einem jeweils geeigneten Standard der Gehalt an oxidiertem Leuco-Farbstoff und somit der Gehalt von Wasserstoffperoxid bestimmt werden.

Als Peroxidase eignet sich für diese Ausführungsform der vorliegenden Erfindung beispielsweise Peroxidasen Typ II (aus Rettich = horseradish), die kommerziell verfügbar sind.

Die durch die Reaktion von zu bestimmendem Wasserstoffperoxid mit dem jeweiligen Reagenz entstehende Substanz wird aufgrund ihrer spezifischen Absorption in einem für sie jeweils geeigneten Wellenlängenbereich mit Hilfe jeweils geeigneter optischer Methoden detektiert.

Grundsätzlich können alle dem Fachmann bekannten optischen Methoden zur Detektion von einer in einem bestimmten Wellenbereich absorbierenden Substanz verwendet werden.

Beispielhaft zu nennen sind hier UV-, UV/VIS-, VIS-, IR-, NIR-, Raman- Spektroskopie. Dabei kann entweder die Absorption (bzw. Transmission), die Reflexion oder die Fluoreszenz ermittelt werden.

In einer bevorzugten Ausführungsform der Erfindung erfolgt die Bestimmung des Gehalts der Substanz durch Messung ihrer spezifischen Absorption und/oder Fluoreszenz im UV/VIS-Bereich des Spektrums.

Bei den im Rahmen der vorliegenden Erfindung zur Detektion geeigneten Geräten handelt es sich im allgemeinen um handelsübliche Spektrometer für den jeweiligen Wellenlängenbereich, bevorzugt um im UV/VIS-Bereich arbeitende Spektrometer.

Unter dem Begriff "Alken", wie er im Rahmen der vorliegenden Erfindung verwendet wird, werden sämtliche Verbindungen verstanden, die mindestens eine C-C-Doppelbindung aufweisen.

Als Beispiele für solche organischen Verbindungen mit mindestens einer C-C-Doppelbindung seien folgende Alkene genannt:
Ethen, Propen, 1-Buten, 2-Buten, Isobuten, Butadien, Pentene, Piperylen, Hexene, Hexadiene, Heptene, Octene, Diisobuten, Trimethylpenten, Nonene, Dodecen, Tridecen, Tetra- bis Eicosene, Tri- und Tetrapropen, Polybutadiene, Polyisobutene, Isoprene, Terpene, Geraniol, Linalool, Linalylacetat, Methylencyclopropan, Cyclopenten, Cyclohexen, Norbomen, Cyclohepten, Vinylcyclohexan, Vinyloxiran, Vinylcyclohexen, Styrol, Cycloocten, Cyclooctadien, Vinylnorbornen, Inden, Tetrahydroinden, Methylstyrol, Dicyclopentadien, Divinylbenzol, Cyclododecen, Cyclododecatrien, Stilben, Diphenylbutadien, Vitamin A, Betacarotin, Vinylidenfluorid, Allylhalogenide, Crotylchlorid, Methallylchlorid, Dichlorbuten, Allylalkohol; Methallylalkohol, Butenole, Butendiole, Cyclopentendiole, Pentenole, Octadienole, Tridecenole, ungesättigte Steroide, Ethoxyethen, Isoeugenol, Anethol, ungesättigte Carbonsäuren wie z.B. Acrylsäure, Methacrylsäure, Crotonsäure, Maleinsäure, Vinylessigsäure, ungesättigte Fettsäuren, wie z.B. Ölsäure, Linolsäure, Palmitinsäure, natürlich vorkommende Fette und Öle.

Im erfindungsgemäßen Verfahren wird Propen umgesetzt.

Das zur umsetzung mit Propen im Rahmen der Erfindung verwendete Wasserstoffperoxid kann dabei beispielsweise mit Hilfe des Anthrachinonverfahrens hergestellt werden, nach dem praktisch die gesamte Menge des weltweit produzierten Wasserstoffperoxids hergestellt wird. Dieses Verfahren beruht auf der katalytischen Hydrierung einer Anthrachinon-Verbindung zur entsprechenden Anthrahydrochinon-Verbindung, nachfolgender Umsetzung derselben mit Sauerstoff unter Bildung von Wasserstoffperoxid und anschließender Abtrennung des gebildeten Wasserstoffperoxids durch Extraktion. Der Katalysezyklus wird durch erneute Hydrierung der rückgebildeten Anthrachinon-Verbindung geschlossen.

Einen Überblick über das Anthrachinonverfahren gibt "Ullmanns Encyclopedia of Industrial Chemistry", 5. Auflage, Band 13, Seiten 447 bis 456.

Ebenso ist es denkbar, zur Wasserstoffperoxidgewinnung Schwefelsäure durch anodische Oxidation unter gleichzeitiger kathodischer Wasserstoffentwicklung in Peroxodischwefelsäure zu überführen. Die Hydrolyse der Peroxodischwefelsäure führt dann auf dem Weg über Peroxoschwefelsäure zu Wasserstoffperoxid und Schwefelsäure, die damit zurückgewonnen wird.

Möglich ist selbstverständlich auch die Darstellung von Wasserstoffperoxid aus den Elementen.

Vor dem Einsatz von Wasserstoffperoxid im erfindungsgemäßen Verfahren ist es möglich, beispielsweise eine kommerziell erhältliche Wasserstoffperoxid-Lösung von unerwünschten Ionen zu befreien. Dabei sind unter anderem Methoden denkbar, wie sie beispielsweise in der WO 98/54086, in der DE-A 42 22 109 oder in der WO 92/06918 beschrieben sind. Ebenso kann mindestens ein Salz, das in der Wasserstoffperoxid-Lösung enthalten ist, durch eine Vorrichtung aus der Wasserstoffperoxid-Lösung mittels Ionenaustausch entfernt werden, die dadurch gekennzeichnet ist, daß die Vorrichtung mindestens ein nicht-saures Ionenaustauscherbett mit einer Strömungsquerschnittsfläche F und einer Höhe H aufweist, wobei die Höhe H des Ionenaustauscherbettes kleiner oder gleich 2,5 • F^{1/2} und insbesondere kleiner oder gleich 1,5 • F^{1/2} ist. Im Rahmen der vorliegenden Erfindung können prinzipiell alle nicht-sauren Ionenaustauscherbetten mit Kationenaustauscher und/oder Anionenaustauscher eingesetzt werden. Auch innerhalb eines Ionenaustauscherbettes können Kationen- und Anionenaustauscher als sogenannte Mischbetten verwendet werden. In einer bevorzugten Ausführungsform der vorliegenden Erfindung wird nur ein Typ von nicht-saueren Ionenaustauschern eingesetzt. Weiter bevorzugt ist der Einsatz eines basischen Ionentauschers, besonders bevorzugt der eines basischen Anionentauschers und weiter besonders bevorzugt der eines schwach basischen Anionentauschers.

Im Rahmen der vorliegenden Erfindung wird ein Zeolith-Katalysator eingesetzt, der ein Titansilikalit unit MFI-Struktur ist.

Zeolithe sind bekanntermaßen kristalline Alumosilikate mit geordneten Kanal- und Käfigstrukturen, die Mikroporen aufweisen, die vorzugsweise kleiner als ungefähr 0,9 nm sind. Das Netzwerk solcher Zeolithe ist aufgebaut aus SiO₄- und AlO₄-Tetraedern, die über gemeinsame Sauerstoffbrücken verbunden sind. Eine Übersicht der bekannten Strukturen findet sich beispielsweise bei W. M. Meier, D. H. Olson und Ch. Baerlocher, "Atlas of Zeolithe Structure Types", Elsevier, 4. Aufl., London 1996.

Es sind nun auch Zeolithe bekannt, die kein Aluminium enthalten und bei denen im Silikatgitter an Stelle des Si(IV) teilweise Titan als Ti(IV) steht. Diese Titanzeolithe, insbesondere solche mit einer Kristallstruktur vom MFI-Typ, sowie Möglichkeiten zu ihrer Herstellung sind beschrieben, beispielsweise in der EP-A 0 311 983 oder EP-A 405 978. Außer Silicium und Titan können solche Materialien auch zusätzliche Elemente wie z. B. Aluminium, Zirkonium, Zinn, Eisen, Kobalt, Nickel, Gallium, Bor oder geringe Mengen an Fluor enthalten. In den mit dem erfindungsgemäßen Verfahren vorzugsweise regenerierten Zeolith-Katalysatoren kann das Titan des Zeoliths teilweise oder vollständig durch Vanadium, Zirkonium, Chrom oder Niob oder ein Gemisch aus zwei oder mehr davon ersetzt sein. Das molare Verhältnis von Titan und/oder Vanadium, Zirkonium, Chrom oder Niob zur Summe aus Silicium und Titan und/oder Vanadium und/oder Zirkonium und/oder Chrom und/oder Niob liegt in der Regel im Bereich von 0,01 : 1 bis 0,1 : 1.

Titanzeolithe, insbesondere solche mit einer Kristallstruktur vom MFI-Typ, sowie Möglichkeiten zu ihrer Herstellung sind beispielsweise in der WO 98/55228, WO 98/03394, WO 98/03395, EP-A 0 311 983 oder der EP-A 0 405 978 beschrieben, deren diesbezüglicher Umfang vollumfänglich in den Kontext der vorliegenden Anmeldung einbezogen wird.

Titanzeolithe mit MFI-Struktur sind dafür bekannt, daß sie über ein bestimmtes Muster bei der Bestimmung ihrer Röntgenbeugungsaufnahmen sowie zusätzlich über eine Gerüstschwingungsbande im Infrarotbereich (IR) bei etwa 960 cm⁻¹ identifiziert werden können und sich damit von Alkalimetalltitanaten oder kristallinen und amorphen TiO₂-Phasen unterscheiden.

Demgemäß betrifft die vorliegende Erfindung auch ein Verfahren, wie oben beschrieben, **dadurch gekennzeichnet, daß** der Katalysator ein Titansilikalit der Struktur TS-1-Struktur ist.

Überraschenderweise wurde bei der Durchführung des Verfahrens festgestellt, daß durch die Online-Bestimmung des Gehalts an Wasserstoffperoxid das laufende Syntheseverfahren optimal gesteuert werden kann. Die Bestimmung erfolgt dabei insbesondere im Reaktionsaustrag. Bei einer Synthese mit hintereinandergeschalteten Reaktoren erfolgt die Bestimmung bevorzugt im Reaktionsaustrag entweder in einzelnen, ausgewählten oder aber allen Reaktoren. Dadurch konnte zum einen die Ausbeute insgesamt, bzw. eines jeden Reaktors sowie die Reinheit des jeweiligen Reaktionsaustrags und somit auch des Produkts optimiert werden. Zum anderen konnte das Sicherheitsrisiko, hervorgerufen durch das im Reaktionsaustrag einer Synthese ohne optimierte Steuerung eventuell vorhandene Wasserstoffperoxid, minimiert werden.

Im Rahmen der vorliegenden Erfindung erfolgt die Bestimmung des Gehalts an Wasserstoffperoxid im Laufe des erfindungsgemäßen Verfahrens weitgehend periodisch, bevorzugt mit einer Frequenz zwischen 0,5 und 100 h⁻¹. Besonders bevorzugt sind Frequenzen im Bereich zwischen 1 und 60 h⁻¹.

Beispielsweise konnte so aufgrund des Zusammenhangs zwischen folgenden Faktoren:
- der im Reaktor herrschenden Temperatur,
- dem Umsatz von Wasserstoffperoxid sowie
- der katalytischen Aktivität des bei der Umsetzung verwendeten Katalysators, der auftretenden Desaktivierung des jeweils eingesetzten Katalysators durch kontinuierliche Temperaturerhöhung bzw. Anpassung des pH-Wertes, wie in DE 199 36 547.4 beschrieben, entgegengewirkt werden.

Die für jeden Regulierungsschritt benötigte Temperaturerhöhung wurde durch die in kurzen Zeitabständen erfolgende Bestimmung des Wasserstoffperoxidgehalts im jeweiligen Reaktionsaustrag bestimmt. Durch die bestehende online Verbindung zwischen der Geräteanordnung zur Bestimmung des Gehalts an Wasserstoffperoxid und der Prozeßsteuerung der Syntheseanlage erfolgt die jeweilige Regulierung ohne wesentliche Zeitverzögerung.

Folglich kann der Umsatz von Wasserstoffperoxid über weitgehend den gesamten Syntheseprozeß gleichbleibend gehalten werden. Dies wirkt sich wiederum positiv auf die Ausbeute und Reinheit des gewünschten Produkts aus.

Bei in Reihe oder hintereinander geschalteten Reaktoren ist es im Rahmen der Erfindung selbstverständlich auch möglich, den Gehalt von Wasserstoffperoxid in jedem Reaktor oder im Reaktionsaustrag eines jeden Reaktors durch die entsprechende Anzahl von Geräteanordnungen zur Online-Bestimmung des Gehalts von Wasserstoffperoxid zu bestimmen. Über eine oder mehrere mit diesen Geräteanordnungen in Verbindung stehenden Datenverarbeitungsanlagen werden der Prozeßsteuerung des jeweiligen Reaktors die dem jeweilig bestimmten Gehalt von Wasserstoffperoxid entsprechenden Steuerbefehle übermittelt. So kann die Prozeßsteuerung bei Bedarf regulierend eingreifen.

Demgemäß betrifft die vorliegende Erfindung auch ein Verfahren zur Steuerung eines Verfahrens zur Oxidation von Propen der erfindungsgemäßen Art, wobei die Umsetzung in mehreren Reaktoren erfolgt. Dieses ist **dadurch gekennzeichnet, daß** in mindestens einem, vorzugsweise allen Reaktoren der Gehalt an Wasserstoffperoxid mittels des erfindungsgemäßen Verfahrens der Online-Bestimmung des Gehalts von Wasserstoffperoxid möglich ist.

Das erfindungsgemäße Verfahren wird, wie oben beschrieben, zur Umsetzung von Propen zu Propylenoxid mit Wasserstoffperoxid in methanolischer Lösung in Gegenwart eines Titansilikalits mit MFI-Struktur eingesetzt.

In einer besonders bevorzugten Ausführung dieser Umsetzung zu Propylenoxid wird in einem ersten Reaktor (Hauptreaktor, beispielsweise Rohrbündelreaktor) Propylen mit Wasserstoffperoxid in Anwesenheit von Methanol, einem basischen Salz und TS-1 als Katalysator umgesetzt.

Dabei wird der Reaktionsdruck so gewählt und bei einem Wert konstant gehalten, bei dem während der Umsetzung keine Gasphase vorhanden ist. Die Temperatur wird so gewählt, daß der Wasserstoffperoxidumsatz im Austrag des Reaktors 85 bis 95%, bevorzugt 88 bis 93% beträgt.

Da der Katalysator typischerweise im Laufe der Umsetzung desaktiviert wird, muß die Temperatur aus oben genannten Gründen kontinuierlich angepasst werden. In der Regel liegt die benötigte Temperaturerhöhung je nach Reaktionsbedingungen zwischen 0,2 und 1,5°C pro Tag.

Um die zum jeweiligen Synthesezeitpunkt genau benötigte Temperaturerhöhung zu bestimmen, wird, wie oben beschrieben, der Wasserstoffperoxidumsatz in kurzen Zeitabständen bestimmt.

Beispielsweise wird der Austrag des ersten Reaktors in einer Destillationskolonne aufgearbeitet, in der mindestens 90%, typischerweise >99% des gebildeten Propylenoxids über Kopf abgetrennt werden.

Das verbleibende Sumpfprodukt wird mit Propylen und gegebenenfalls mit einem basischen Salz versetzt und in einem zweiten Reaktor (Nachreaktor, beispielsweise ein einfacher Rohr- oder Schacht-Reaktor) umgesetzt. In dem Nachreaktor werden bevorzugt 90 bis 95% des hierbei eingesetzten Wasserstoffperoxids umgesetzt, da bei niedrigeren Umsätzen häufig das auch sicherheitstechnisch problematische Wasserstoffperoxid übrig bleibt, bei höheren Umsätzen häufig jedoch die Selektivität der Umsetzung abfällt.

Um den Umsatz im Nachreaktor zu steuern, wird hierbei über die Prozeßsteuerung beispielsweise die Eingangstemperatur oder die Basenmenge, entsprechend dem online bestimmten Gehalt an Wasserstoffperoxid, angepaßt.

Die Erfindung soll nunmehr anhand von Beispielen näher erläutert werden.

### Beispiel 1

### Vorrichtung zur Online-Bestimmung von Wasserstoffperoxid

Der Gesamtaufbau für die UV/VIS-spektroskopische Online-H₂O₂-Bestimmung besteht aus:
1. einem Dosier- und Steuerungssystem (z.B. Prozeßtitrator der "ADI"-Serie von der Fa. Metrohm) für die automatische Probenahme und Durchführung der Farbreaktion,
2. einer in das Reaktionsgefäß eintauchenden faseroptischen Transmissionssonde, welche über Quarzlichtleitfasern mit
3. einem UV/VIS-Spektrometer (vorzugsweise einem Diodenzeilenspektrometer) zur Spektrenaufnahme verbunden ist sowie
4. einem Computer (PC) für die Spektrenauswertung und H₂O₂-Konzentrationsberechnung.
5. Die so im Produktstrom ermittelten H₂O₂-Konzentrationen können anschließend mit Hilfe eines Digital-/Analog-Wandlers als 4-20 mA-Stromsignal auf ein Prozeßleitsystem zur Steuerung der Anlage gegeben werden.

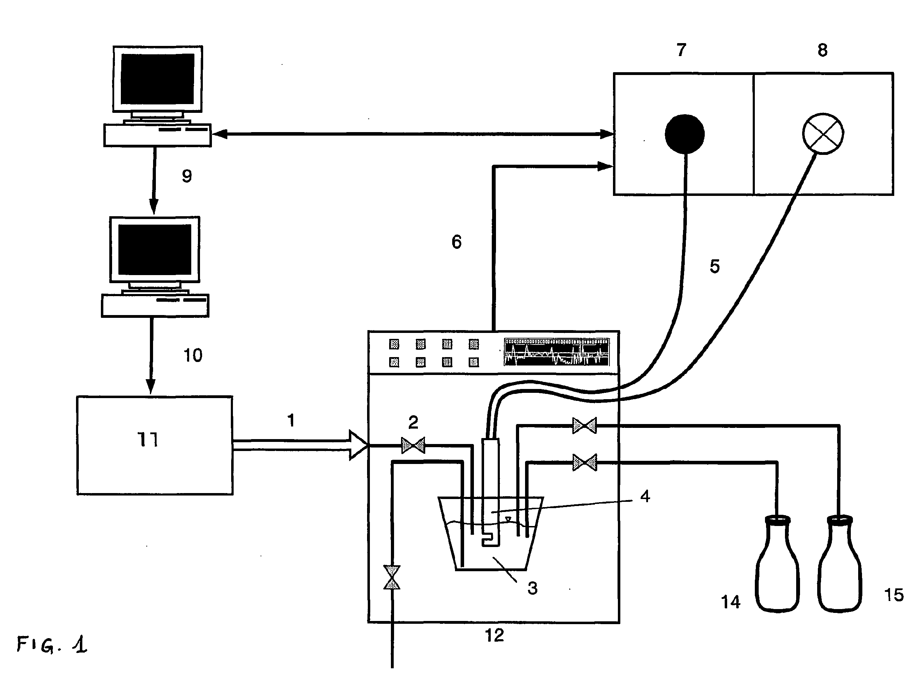

Der schematische Aufbau ist in Figur 1 gezeigt.

Die Triggerung des UV/VIS-Spektrometers erfolgt vorzugsweise durch den Prozeßtitrator. In jedes der in den Prozeßtitratoren befindlichen Reaktionsgefäße taucht- dann eine Transmissionssonde ein. Sind diese Transmissionssonden über Lichtleiter (vorzugsweise aus Quarz) mit einem optischen Mehrkanal-Multiplexer verbunden, so genügt in der Regel ein Spektrometer für die (fast) gleichzeitige Aufnahme der Absorptionsspektren an den verschiedenen Meßstellen.

### Durchführung der H₂O₂-Bestimmung:

Über eine Kapillarleitung werden mit Hilfe des Dosiersystems wenige Milliliter Probe (typisch 0,5 - 5 ml je nach Konzentration) aus dem Produktstrom entnommen und in das im Titrator befindliche Reaktionsgefäß überführt. Hierzu wird das Farbreagenz (kommerziell verfügbare Titanylsulfatlösung, ca 5 Gew.-% Ti) (typisch 0,5 - 5 ml) aus einem Vorratsgefäß gegeben. Dabei bildet sich nach kurzer Zeit (typischerweise 1 min) ein gelblicher Titanylperoxo-Komplex. Anschließend wird mit einem Lösungsmittel (z.B. destilliertes Wasser, verdünnte Schwefelsäure, etc.) auf ein bestimmtes Volumen (typisch 25 bis 500 ml) aufgefüllt.

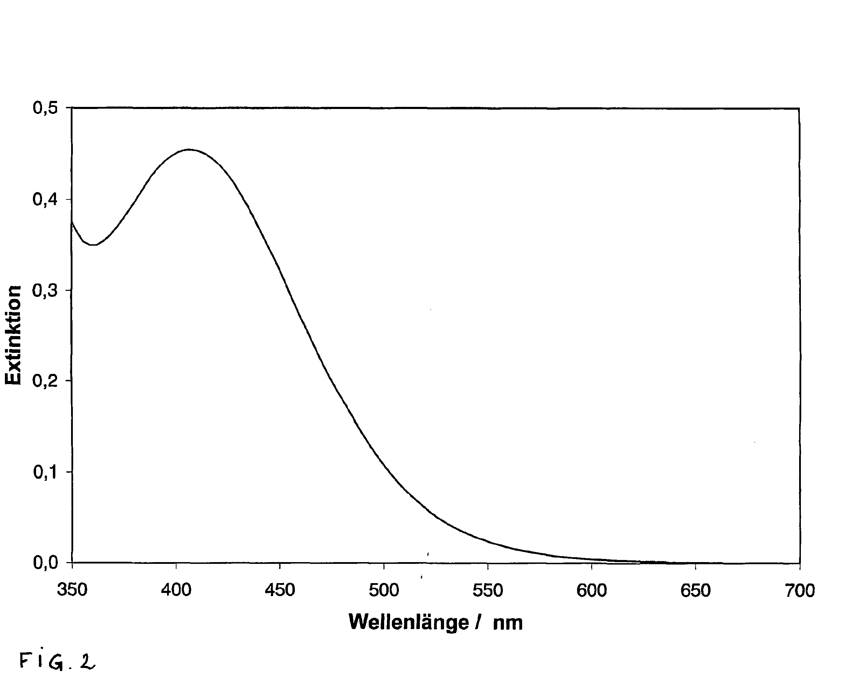

Für die Aufnahme des UV/VIS-Absorptionsspektrums ist es erforderlich, daß der Meßspalt der Transmissionssonde vollständig in die zu analysierende Lösung eintaucht. Ein typisches UV-Spektrum ist in Figur 2 gezeigt. Als Referenz (= 100% Transmission) dient ein zuvor gegen das Lösungsmittel aufgenommenes Spektrum.

Die Umrechnung der gemessenen UV/VIS-Extinktionen in H₂O₂-Konzentrationen erfolgt im Meß- und Auswerteprogramm auf dem Computer mit Hilfe einer. Kalibrierfunktion. Dazu wird vorzugsweise die Extinktion im Absorptionsmaximum des Titanylperoxo-Komplexes bei ca. 408 nm verwendet.

### Beispiel 2

### Ablaufsequenz zur photometrischen Online-Bestimmung von H₂O₂

Zur Online-Bestimmung von Wasserstoffperoxid im Austrag eines Reaktors zur Epoxidation von Propylen wurde eine Anlage aufgebaut wie im Beispiel 1, Figur 1 beschrieben, die folgende Komponenten beinhaltete:
- Dosiersystem (ADI 2015 der Fa. Metrohm) mit Steuereinheit und Meßzelle,
- UV/VIS-Diodenzeilenspektrometer (MCS521 der Fa. Zeiss),
- Computer (Spektrometeransteuerung, Auswertung, Datentransfer an PLS),
- Optische Tauchsonde (Fa. Hellma).

Die eigentliche Messung erfolgte nach der nachfolgend beschriebenen Sequenz:
1. Entleeren der Meßzelle (Reaktionsgefäß),
2. Befüllung der Meßzelle mit Lösungsmittel (z.B. Wasser) ("Nullprobe"),
3. Triggersignal an UV/VIS-Prozeßspektrometer zur Aufnahme des
4. Referenzspek-trums mittels Transmissionssonde,
5. Meßzelle durch absaugen entleeren,
6. Probe (typischerweise 0,5 - 5ml je nach H₂O₂-Konzentration) transferieren (Ansaugen der Probe über eine Kapillarleitung aus der Probenahmestelle und dosieren in die Meßzelle),
7. Reagenz (typischerweise 0,5 - 5ml) Titanylsulfatlösung mit ca. 5 Gew.-% Ti je nach H₂O₂-Konzentration wird in die Meßzelle dosiert,
8. Pause (wenige Sekunden bei Raumtemperatur) zur Ausbildung des Titanylperoxo-Komplexes,
9. Mit Lösungsmittel (z.B. Wasser) auf bestimmtes Volumen (typischerweise 25 - ; 500 ml) auffüllen,
10. Pause,
11. Triggersignal an Spektrometer zur Aufnahme des UV/VIS-Absorptionsspektrums der Reaktionslösung,
12. Auswertungsprogramm am Computer berechnet aus der Extinktion die H₂O₂-Konzentration,
13. Übertragung der H₂O₂-Konzentration vom Computer auf das Prozeßleitsystem der Syntheseanlage,
14. Entleeren der Meßzelle,
15. Spülen der Meßzelle mit Lösungsmittel.
   Nach definierter Wartezeit beginnt die Sequenz von Neuem bei Punkt 1.

### Beispiel 3

Die Epoxidation von Propylen mit Wasserstoffperoxid wurde in einem mit Kühlmantel versehenen Rohrreaktor mit 45 mm Durchmesser und 2 m Länge, der mit ca. 620 g eines frischen Epoxidationskatalysators (Titansilicalit TS-1 in Form von Strängen mit 1,5 mm Durchmesser) gefüllt war, durchgeführt. Die Einsatzmengen der einzelnen Edukte waren wie folgt:

| | |
|---|---|
| Methanol: | 1834 g/h |
| Wasserstoffperoxid (40%ig in Wasser): | 332 g/h |
| Propen: | 244 g/h |
| K₂HPO₄-Lösung (1.25 Gew.-%ig in Wasser): | 4 g/h |

Die einzelnen Edukte wurden vor dem Reaktor unter Druck (ca. 20 bar) zusammengeführt und durch den Reaktor geleitet. Die Temperatur des Kühlmediums im Mantelraum betrug am Anfang des Versuchs ca. 30°C. Bei beginnendem Umsatzrückgang wurde die Temperatur des Kühlmediums so angepaßt, daß ein konstanter Umsatz an Wasserstoffperoxid erzielt wurde. Für die Umsatzbestimmung wurde das Wasserstoffperoxid im Austrag des Reaktors online, wie in den Beispielen 1 und 2 beschrieben, bestimmt.

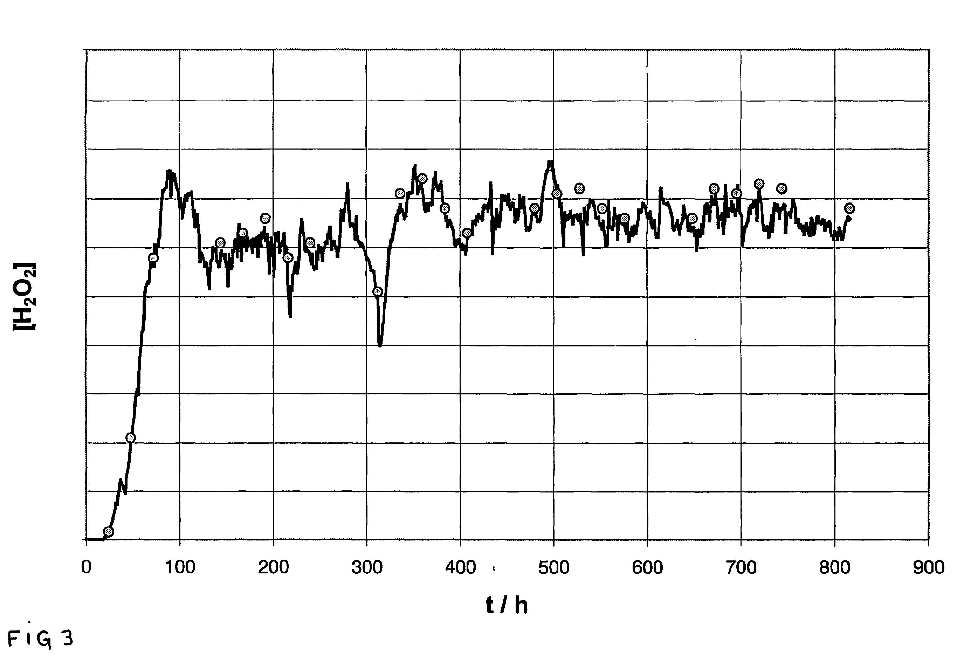

Zusätzlich wurde einmal täglich eine Probe entnommen, die als Vergleich mit der Titanylsulfatmethode offline bestimmt wurde. Die Ergebnisse aus dem Vergleich zwischen der Online- und der Offline-Bestimmung während eines Versuches über fast 800 Stunden sind in Figur 3 gezeigt.

Fig. 3 zeigt einen Vergleich zwischen dem mit dem Online- bzw. Offline-Verfahren bestimmten Gehalt von Wasserstoffperoxid im Reaktionsaustrag des im Beispiel beschriebenen Reaktors. (Das Online-Verfahren ist in Fig. 3 mittels einer Linie dargestellt; das Offline-Verfahren mittels kreisförmiger Meßpunkte.)

Die gute Übereinstimmung zwischen der Online- und der Offline-Bestimmung des Gehalts von Wasserstoffperoxid zeigt die Qualität der Messung. Eine reine Offline-Bestimmung wäre zur hier angestrebten kontinuierlichen Anpassung der Temperatur bzw. zum Konstanthalten des Wasserstoffperoxid-Umsatzes nicht ausreichend.

### Bezugsziffern Fig. 1

- 1 =: Leitung zur Probeentnahme
- 2 =: Probeentnahmeventile
- 3 =: Meßzelle
- 4 =: Transmissionssonde
- 5 =: Lichtleiter
- 6 =: Triggersignal
- 7 =: Spektrometer
- 8 =: Lichtquelle
- 9 =: Signal proportional zur H₂O₂-Konzentration von Computer- bzw. Datenverarbeitungssystem an Prozeßleitsystem
- 10 =: Steuerbefehle von Prozeßleitsystem an Prozeß
- 11 =: Propylenoxid-Anlage
- 12 =: Prozeß-Titrator
- 13 =: Ablauf
- 14 =: Lösungsmittel
- 15 =: Farbreagenz

## Patentansprüche

1. Verfahren zur Steuerung eines Verfahrens zur Oxidation von Propen zu Propylenoxid mit Wasserstoffperoxid in methanolischer Lösung in Gegenwart eines Zeolith-Katalysators, der ein Titansilikalit mit MFI-Struktur ist, wobei während der Umsetzung der Gehalt an Wasserstoffperoxid im Umsetzungsgemisch online bestimmt wird mittels eines Verfahrens, welches wenigstens die folgenden Stufen umfasst:
(1) Versetzen des Wasserstoffperoxid enthaltenden Gemischs mit wenigstens einem Reagenz, welches mit Wasserstoffperoxid zur Bildung einer mit optischen Methoden detektierbaren Substanz geeignet ist, unter Bildung der Substanz,
(2) Bestimmung des Gehalts der Substanz durch Messung ihrer spezifischen Absorption in einem dafür geeigneten Wellenlängenbereich,
und wobei diese online Bestimmung mittels einer Geräteanordnung, umfassend mindestens eine Probenentnahmevorrichtung zur Entnahme einer Probe aus dem im Laufe der Synthese anfallenden Reaktionsgemisches, wenigstens eine Geräteanordnung zur Aufbereitung der Probe, wenigstens eine Vorrichtung, welche geeignet ist, die spezifische Absorption der Probe in einem dafür geeigneten Wellenlängenbereich zu bestimmen, und wenigstens ein, mit diesen Vorrichtungen in Verbindung stehendes Gerät, welches geeignet ist die Steuerfunktion der einzelnen Geräte zu übernehmen, um deren Betriebsablauf zu koordinieren, durchgeführt wird, und wobei zur Prozesssteuerung der Syntheseanlage die von der Geräteanordnung zur online Bestimmung von Wasserstoffperoxid ermittelten Daten über mindestens eine mit dieser Geräteanordnung in Verbindung stehenden Datenverarbeitungsanlage ausgewertet und in Steuerbefehle für die Prozesssteuerung der Syntheseanlage umgewandelt werden, und wobei die Steuerbefehle an die mit der wenigstens einen Datenverarbeitungsanlage in Verbindung stehenden Prozesssteuerung der Syntheseanlage weitergeleitet werden.

2. Verfahren nach Anspruch 1, **dadurch gekennzeichnet, daß** das wenigstens eine Reagenz ausgewählt wird aus der Gruppe bestehend aus Metallen der IV. bis IX. Nebengruppe des Periodensystems der Elemente.

3. Verfahren nach Anspruch 2, **dadurch gekennzeichnet, daß** das wenigstens eine Reagenz ausgewählt wird aus der Gruppe bestehend aus einer Titan, Cobalt, Chrom, Zirkonium, Hafnium, Vanadium, Niob, Tantal enthaltenden Verbindung.

4. Verfahren nach einem der Ansprüche 1 bis 3, **dadurch gekennzeichnet, daß** das wenigstens eine Reagenz einen Leuco-Farbstoff und eine Peroxidase umfaßt.

5. Verfahren nach einem der Ansprüche 1 bis 4, **dadurch gekennzeichnet, daß** die Bestimmung des Gehalts der Substanz durch Messung ihrer spezifischen Absorption und/oder Fluoreszenz im UV/VIS -Bereich des Spektrums erfolgt.

6. Verfahren nach einem der Ansprüche 1 bis 5, wobei die Umsetzung in mehreren Reaktoren erfolgt, **dadurch gekennzeichnet, daß** in mindestens einem, vorzugsweise allen Reaktoren der Gehalt an Wasserstoffperoxid mittels eines Verfahrens nach einem der Ansprüche 1 bis 5 bestimmt wird.

## Claims

1. A method of controlling a process for the oxidation of propene to propylene oxide by means of hydrogen peroxide in methanolic solution in the presence of a zeolite catalyst which is a titanium silicalite having an MFI structure, where the content of hydrogen peroxide in the reaction mixture is determined on-line during the reaction by means of a method which comprises at least the following steps:
(1) admixing the mixture comprising hydrogen peroxide with at least one reagent which is capable of forming a substance which can be detected by optical methods on reaction with hydrogen peroxide, so as to form this substance,
(2) determining the amount of the substance present by measuring its specific absorption in an appropriate wavelength range,
and this on-line determination is carried out by means of an apparatus setup comprising at least one sampling apparatus for taking a sample from the reaction mixture obtained during the course of the synthesis, at least one apparatus setup for preparing the sample, at least one apparatus which is suitable for determining the specific absorption of the sample in a wavelength range suitable for this purpose and at least one instrument which is connected to these apparatuses and is suitable for controlling the individual apparatuses in order to coordinate their operation and, in order to effect process control of the synthesis plant, the data determined by the apparatus setup for on-line determination of hydrogen peroxide are evaluated by means of at least one data processing unit connected to this apparatus setup and converted into control commands for the process control of the synthesis plant and the control commands are transmitted to the process control of the synthesis plant which is connected to the at least one data processing unit.

2. The method according to claim 1, wherein the reagent or reagents is/are selected from the group consisting of metals of transition groups IV to IX of the Periodic Table of the Elements.

3. The method according to claim 2, wherein the reagent or reagents is/are selected from the group consisting of titanium-, cobalt-, chromium-, zirconium-, hafnium-, vanadium-, niobium- and tantalum-comprising compounds.

4. The method according to any of claims 1 to 3, wherein the reagent or reagents comprise(s) a leuco dye and a peroxidase.

5. The method according to any of claims 1 to 4, wherein the determination of the amount of the substance present is carried out by measuring its specific absorption and/or fluorescence in the UV/VIS region of the spectrum.

6. The method according to any of claims 1 to 5, wherein the reaction is carried out in a plurality of reactors and the hydrogen peroxide content is determined by means of a method according to any of claims 1 to 5 in at least one reactor, preferably all reactors.

## Revendications

1. Procédé de commande d'un procédé d'oxydation de propène en oxyde de propylène avec du peroxyde d'hydrogène dans une solution méthanolique en présence d'un catalyseur à base de zéolithe, qui est un silicalite de titane ayant une structure MFI, la teneur en peroxyde d'hydrogène dans le mélange réactionnel étant déterminée en ligne pendant la réaction par un procédé, qui comprend au moins les étapes suivantes :
(1) mélange du mélange contenant le peroxyde d'hydrogène avec au moins un réactif, qui est apte à former avec le peroxyde d'hydrogène une substance détectable par des procédés optiques, pour former la substance,
(2) détermination de la teneur de la substance par mesure de son absorption spécifique dans une plage de longueurs d'onde appropriée pour cela,
et cette détermination en ligne étant réalisée par un ensemble d'appareils, comprenant au moins un dispositif de prélèvement d'échantillons destiné à prélever un échantillon du mélange réactionnel se formant au cours de la synthèse, au moins un ensemble d'appareils destiné à conditionner l'échantillon, au moins un dispositif qui est apte à déterminer l'absorption spécifique de l'échantillon dans une plage de longueurs d'onde appropriée pour cela et au moins un appareil connecté à ces dispositifs, qui est apte à prendre en charge la fonction de commande des appareils individuels et à coordonner leur procédure de fonctionnement, et, pour la commande du processus de l'unité de synthèse, les données calculées par l'ensemble d'appareils pour la détermination en ligne du peroxyde d'hydrogène étant exploitées par au moins une unité de traitement des données connectée à cet ensemble d'appareils et transformées en instructions de commande pour la commande du processus de l'unité de synthèse, et les instructions de commande étant transmises à la commande du processus de l'installation de synthèse connectée à l'unité ou aux unités de traitement des données.

2. Procédé selon la revendication 1, **caractérisé en ce que** le ou les réactifs sont choisis dans le groupe constitué des métaux des groupes de transition IV à IX du tableau périodique des éléments.

3. Procédé selon la revendication 2, **caractérisé en ce que** le ou les réactifs sont choisis dans le groupe constitué d'un composé contenant du titane, du cobalt, du chrome, du zirconium, de l'hafnium, du vanadium, du niobium, du tantale.

4. Procédé selon l'une quelconque des revendications 1 à 3, **caractérisé en ce que** le ou les réactifs comprennent un leuco-colorant et une peroxydase.

5. Procédé selon l'une quelconque des revendications 1 à 4, **caractérisé en ce que** la détermination de la teneur de la substance a lieu par mesure de sa fluorescence et/ou de son absorption spécifique dans la plage UV/VIS du spectre.

6. Procédé selon l'une quelconque des revendications 1 à 5, la réaction ayant lieu dans plusieurs réacteurs, **caractérisé en ce que** la teneur en peroxyde d'hydrogène est déterminée par un procédé selon l'une quelconque des revendications 1 à 5 dans au moins un réacteur, de préférence dans tous les réacteurs.
